# FASCICULE DE BREVET EUROPEEN

(11) **EP 2 484 081 B1**
(45) Date de publication et mention de la délivrance du brevet: **03.12.2014**
(21) Numéro de dépôt: 10770607.9
(22) Date de dépôt: 22.09.2010
(51) Int. Cl.: H04L 29/06, H04M 7/00

(54) **SYSTEME ET PROCEDE DE CONTROLE DE SESSION DE COMMUNICATION DANS UN TERMINAL D'UN RESEAU LOCAL**
SYSTEM UND VERFAHREN ZUR STEUERUNG EINER KOMMUNIKATIONSSITZUNG BEI EINEM LAN-ENDGERÄT
SYSTEM AND METHOD FOR CONTROLLING A COMMUNICATION SESSION IN A TERMINAL OF A LOCAL AREA NETWORK

(30) Priorité: 29.09.2009 FR 0956726
(43) Date de publication de la demande: 08.08.2012
(73) Titulaire: Orange, 75015 Paris (FR)
(72) Inventeur: BOUVET, Bertrand, F-22700 Perros Guirec (FR)
(74) Mandataire: Delumeau, François Guy
(86) Numéro de dépôt international: PCT/FR2010/051989
(87) Numéro de publication internationale: WO 2011/039450

(56) Documents cités:
- FR-A1- 2 909 820
- US-A1- 2007 286 160

## Description

### Arrière-plan de l'invention

L'invention se situe dans le domaine des télécommunications et du contrôle de sessions de communication impliquant des terminaux au sein d'un réseau résidentiel ou professionnel.

L'invention s'applique notamment, mais de façon non limitative, aux applications de téléphonie ou vidéophonie fixe ou mobile.

Les offres de téléphonie fixe et mobile proposées par les opérateurs se sont beaucoup développées récemment.

De façon connue, une passerelle résidentielle offre à une pluralité de terminaux domestiques la possibilité de communiquer avec des terminaux distants, via le réseau Internet auquel est connectée cette passerelle, en utilisant un protocole de voix sur IP (Internet Protocol) connu sous l'acronyme VoIP (Voice Over IP).

Une passerelle est connue du réseau Internet sous son identité publique connue de l'homme du métier sous l'acronyme « IMPU » (pour « IP Multimédia Public Identity »).

Les services VoIP peuvent ainsi être utilisés à partir de terminaux téléphoniques spécifiques connectés directement sur un port de la passerelle résidentielle (téléphone physique RTC sur le port FXS...) ou à partir d'un ou de plusieurs terminaux domestiques munis d'un logiciel de téléphonie dédié.

Ces logiciels VoIP sont communément appelés « softphone » en référence au fait qu'ils sont généralement de nature logicielle. Ces logiciels peuvent être installés sur des micro-ordinateurs ou sur des terminaux physiques natifs VoIP par exemple.

Par ailleurs, les réseaux utilisés par les opérateurs pour offrir ce type de service sont généralement de type IMS (IP Multimédia Subsystem). L'architecture standardisée IMS permet la fourniture de services multimédias fixes et mobiles selon le protocole SIP (Session Internet Protocol).

Aujourd'hui, un nombre croissant d'équipements électroniques sont capables de mettre en oeuvre un logiciel de téléphonie VoIP et de se connecter à un réseau résidentiel pour communiquer avec un réseau de communication distant par l'intermédiaire d'une passerelle. Par ailleurs, il existe une demande très forte des consommateurs pour pouvoir disposer de services VoIP actifs sur l'ensemble des terminaux domestiques (ordinateurs, agenda électroniques, terminaux mobiles munis d'application VoIP via connexion WIFI...) de leur réseau résidentiel. Pour se faire, il est nécessaire d'installer sur chaque terminal d'un même réseau local un logiciel VoIP approprié.

Cependant, les opérateurs de téléphonie actuels limitent le nombre de logiciels VoIP au sens large du terme qu'un client peut installer au sein de son réseau local car la mise à disposition illimitée de tels logiciels aux utilisateurs aurait plusieurs conséquences néfastes.

Tout d'abord, l'offre et l'installation illimitée de ce type de logiciel causerait une augmentation significative des ressources sollicitées au niveau du réseau des opérateurs pour gérer de tels services.

En effet, chaque fois qu'un logiciel VoIP est activé sur un terminal domestique, celui-ci tente de s'enregistrer auprès du réseau de communication de l'opérateur, la demande d'enregistrement transitant par la passerelle domestique.

Pour se faire, le terminal en question envoie au travers de la passerelle domestique qui applique une fonctionnalité NAT/PAT (pour « Network Adress Translation/Port Adress Translation ») une requête d'enregistrement SIP à un serveur spécifique (un serveur S-CSCF pour «Serving Call Session Control Function », par exemple) du réseau IMS, via un serveur spécifique P-CSCF (Proxy-Call Session Control Function). Cette requête est communément appelée « message SIP REGISTER ». Une telle requête comprend en particulier des informations d'enregistrement (ou informations de contexte), comme par exemple l'adresse IP et le numéro de port de joignabilité du terminal s'enregistrant ainsi que le numéro de téléphone de la ligne téléphonique en question. L'enregistrement de chaque terminal est nécessaire pour bénéficier du service VoIP désiré.

Un logiciel VoIP actif sur un terminal d'un réseau local est configuré pour envoyer à un intervalle régulier (de l'ordre de toutes les minutes) une requête d'enregistrement au réseau IMS via sa passerelle résidentielle, sans quoi il ne peut être joint du réseau IMS. L'envoi répété de ces requêtes d'enregistrement permet de maintenir à jour les tables de Binding NAT de la passerelle résidentielle (correspondance entre adresse IP:port attribuée au couple terminal/logiciel VoIP dans le réseau local et adresse IP:port utilisée par la passerelle et vue du réseau de l'opérateur) et de rafraîchir et donc de prolonger la durée d'enregistrement du logiciel VoIP auprès du réseau IMS.

Aujourd'hui, le nombre d'enregistrements SIP possibles auprès d'un réseau IMS à un moment donné est généralement bridé par l'opérateur de ce réseau, le réseau IMS étant configuré pour retourner un message d'erreur du type « 503 Service Unavailable » en réponse à chaque requête d'enregistrement SIP qui ne peut être satisfaite.

Chaque requête d'enregistrement SIP refusée génère donc une charge importante et inutile pour l'opérateur. L'installation généralisée de logiciels VoIP sur l'ensemble des terminaux des réseaux résidentiels des utilisateurs provoquerait donc une augmentation de trafic importante, inutile et indésirable pour l'opérateur.

Par ailleurs, comme rappelé ci-dessus, les réseaux IMS sont généralement configurés pour n'autoriser qu'un nombre limité d'enregistrements simultanés correspondant à une même identité publique IMPU.

Différents mécanismes de contrôle sont aujourd'hui utilisés pour interdire, au delà d'un nombre prédéterminé, l'enregistrement SIP de terminaux présentant une même IMPU.

Par exemple, certaines offres proposent de limiter à un le nombre maximum de terminaux enregistrés à un instant donné auprès du réseau IMS pour une identité publique IMPU donnée. Lorsqu'un nouveau terminal tente de s'enregistrer alors qu'un premier terminal du réseau local est déjà enregistré auprès du réseau IMS, l'enregistrement de ce premier terminal est automatiquement suspendu (mécanisme FIFO) et le nouveau terminal est enregistré en lieu et place du premier terminal. Ce mécanisme provoque donc des enregistrements temporaires sur les différents terminaux, ce qui conduit à un fonctionnement non déterministe.

Si les opérateurs permettaient à leur client d'équiper un plus grand nombre de terminaux domestiques de leur réseau local avec un logiciel VoIP, il y a un risque important que le nombre croissant de requêtes d'enregistrement provenant de chaque terminal entre en conflit avec les mécanismes de bridage mis en place dans les réseaux IMS.

En conséquence, un utilisateur ne pourrait pas disposer d'un service de VoIP actif sur l'ensemble de ses terminaux domestiques mêmes si ces derniers étaient tous équipés du logiciel VoIP correspondant.

Dans le cas du mécanisme de bridage FIFO, par exemple, l'enregistrement d'un nombre trop important de terminaux d'un même réseau domestique causerait la suspension intempestive de l'enregistrement de certains terminaux (les premiers enregistrés en l'occurrence), voir même de la passerelle résidentielle elle-même. La suspension de l'enregistrement de la passerelle résidentielle, en particulier, causerait la perte complète des services VoIP offerts via les terminaux téléphoniques classiques raccordés.

Il existe donc un besoin dans l'art de la technique actuel pour offrir la possibilité aux utilisateurs de bénéficier d'un service VoIP actif sur une pluralité de terminaux domestiques au sein d'un même réseau local.

Une solution a été proposée dans le document EP2092717 consistant à un installer dans la passerelle résidentielle un module logiciel SENAC-F de type REGISTRAR (au sens SIP). La **figure 1** représente un exemple de passerelle résidentielle telle que proposée dans ce document.

La passerelle résidentielle GTW permet la liaison entre un réseau local LAN et un réseau de communication distant IMS.

La passerelle GTW comprend en particulier un module DHCP correspondant à un serveur local DHCP apte à attribuer des adresses IP locales et des masques de réseau aux terminaux se connectant au réseau local LAN.

La passerelle résidentielle GTW comprend en outre un module SENAC-F ainsi que des modules FXS et USB pour contrôler respectivement les ports physiques FXS et USB installés sur la passerelle.

Trois terminaux locaux T1, T2 et T3 sont connectés au réseau local LAN, chacun étant muni d'un logiciel de téléphonie VoIP (ou « softphone ») permettant à un utilisateur de communiquer notamment avec un terminal distant T4 connecté au réseau IMS.

De manière connue, lorsque la passerelle résidentielle GTW est activée, elle obtient à partir d'un serveur DHCP du réseau distant IMS une adresse IP dont la durée de validité est limitée (bail alloué de 24 heures, par exemple).

Une fois l'adresse IP obtenue, le module SENAC-F de la passerelle résidentielle GTW envoie une requête d'enregistrement SIP au réseau IMS afin d'enregistrer la passerelle auprès du réseau IMS. La passerelle GTW équipée d'un module SENAC-F est configurée pour être la seule à s'enregistrer auprès du réseau IMS.

Tous les terminaux physiques reliés directement à la passerelle via les ports FXS, USB etc. ainsi que les logiciels VoIP installés sur les terminaux domestiques T1, T2 et T3 ne s'enregistrent que localement auprès du module SENAC-F de la passerelle.

Plus précisément, une fois démarré, chacun des terminaux T1, T2 et T3 obtient une adresse IP locale (ou adresse IP LAN) et un masque de réseau auprès du serveur DHCP localisé dans la passerelle résidentielle GTW.

Chacun des logiciels VoIP sur les terminaux T1, T2 et T3 s'enregistre ensuite localement auprès de la passerelle GTW en envoyant une requête d'enregistrement SIP au module SENAC-F de la passerelle. Le module SENAC-RF de la passerelle acquitte chaque enregistrement local en renvoyant une réponse 200 OK.

Une fois enregistré, le logiciel VoIP sur chacun des terminaux T1, T2 et T3 est actif ce qui signifie qu'un utilisateur peut établir une session de communication entre un de ces terminaux et le terminal distant T4, par l'intermédiaire de la passerelle GTW. L'établissement d'une telle session sera contrôlé par le module SENAC-F qui se placera en coupure de flux entre le réseau local LAN et le réseau distant IMS pour chaque échange de signalisations de session (les signalisations de session seront décrites plus en détail ultérieurement).

Cette solution permet ainsi de s'affranchir de la charge réseau engendrée par les demandes d'enregistrement répétées des terminaux du réseau local LAN auprès du réseau IMS et également d'éviter tout conflit avec les mécanismes de bridage d'enregistrement évoqués ci-dessus.

Cette solution n'est cependant pas toujours satisfaisante puisqu'elle nécessite des ressources en termes de mémoire, de capacité de traitement et de logiciel qui ne sont pas toujours disponibles dans les passerelles utilisées aujourd'hui, mises à part certaines passerelles de dernière génération. Si un utilisateur souhaite disposer d'un service VoIP actif sur l'ensemble des terminaux de son réseau résidentiel, il sera nécessaire dans une majorité des cas de lui fournir une nouvelle passerelle disposant du niveau de ressources requis (en particulier d'un module de type SENAC-F). Le remplacement des passerelles engendre inévitablement un coût et des difficultés que les opérateurs souhaitent limiter.

### Objet et résumé de l'invention

L'invention concerne un premier dispositif de contrôle de session de communication compris dans un premier terminal local d'un réseau local, relié via une passerelle à un réseau de communication distant auquel est connecté au moins un terminal distant, ledit dispositif de contrôle comprenant :
des moyens de détermination pour déterminer si un autre terminal local du réseau local est configuré pour mettre en oeuvre une fonction proxy pour contrôler au moins les transactions d'établissement de session entre le terminal distant et chacun des terminaux du réseau local ; et
des moyens de configuration aptes, en cas d'échec de la détermination, à enregistrer le premier terminal auprès du réseau distant et à configurer le premier terminal local pour qu'il active la fonction proxy.

Lorsque le premier terminal est configuré avec la fonction proxy, on dit qu'il est configuré en tant que « terminal maître ».

Dans ce document, la notion de « transaction de session » désigne les messages de signalisation normalisés qui sont échangés entre deux terminaux ou serveurs pour permettre en particulier l'initialisation, le démarrage puis la clôture d'une session de communication dans un réseau distant.

Les transactions d'établissement de session correspondent aux transactions réalisées entre deux terminaux ou serveurs afin d'établir une session de communication.

Les transactions au sens de l'invention seront décrites plus en détail dans la suite de ce document. Ces transactions peuvent correspondre, par exemple mais pas exclusivement, à des transactions SIP de session de communication.

Par ailleurs, on entend ici par « contrôle » d'une transaction par un terminal, le fait que ce terminal se place en coupure de flux entre deux autres terminaux s'échangeant une signalisation de session.

L'invention est avantageuse en ce qu'elle permet à un grand nombre de terminaux dans un réseau local de mettre simultanément en oeuvre un logiciel de téléphonie VoIP de manière à mettre à la disposition d'un utilisateur un service de téléphonie VoIP sur chacun de ses terminaux dans le réseau local.

Par « mettre simultanément en oeuvre », il faut comprendre ici qu'une fois que les terminaux sont enregistrés auprès du réseau distant IMS, le logiciel VoIP de chacun de ces terminaux est « actif » sans qu'il y ait pour autant une session de Voix sur IP ouverte simultanément sur chacun de ces terminaux.

La mise en oeuvre simultanée de ces logiciels VoIP n'engendre pas d'augmentation significative de la signalisation SIP échangée entre le réseau distant et le réseau local. En particulier, seul un terminal exécutant la fonction proxy doit s'enregistrer auprès du réseau distant puis rafraîchir son enregistrement en envoyant périodiquement une requête d'enregistrement au réseau, engendrant en retour un nombre réduit de réponses de la part de ce réseau distant. Ceci permet de ne pas solliciter inutilement les ressources du réseau distant d'un opérateur de communication.

De manière avantageuse, il est possible d'activer un grand nombre de logiciels VoIP sur des terminaux d'un réseau résidentiel sans causer de conflits avec le nombre maximum d'enregistrements simultanés autorisé par le réseau pour une identité publique IMPU donnée, puisque grâce à l'invention, seuls le terminal maître et la passerelle sont enregistrés auprès du réseau distant à l'aide de l'IMPU de la passerelle.

L'invention est en outre avantageuse en ce qu'elle ne nécessite pas la mise en oeuvre d'un module de type SENAC-F dans la passerelle résidentielle, comme décrit ci-dessus. Un premier dispositif de contrôle est simplement installé sur le ou les terminaux du réseau local pouvant fonctionner en tant que terminal maître.

Il est ainsi possible d'utiliser avantageusement les ressources importantes en termes de capacité de traitement des terminaux (en particulier des ordinateurs personnels...) généralement présents dans les réseaux résidentiels des utilisateurs. Ces terminaux disposent en effet le plus souvent de ressources largement suffisantes pour superviser l'enregistrement des terminaux locaux et les transactions de session avec les réseaux de communication distants.

L'invention ne se limite cependant pas à la téléphonie VoIP. Elle s'applique à d'autres types de terminaux tels que, par exemple, des terminaux téléphoniques SIP, des téléviseurs IPTV, un PBX (Private Branch Exchange)...

Le premier dispositif de contrôle peut comprendre en outre des moyens d'enregistrement configurés, lorsque le premier terminal est configuré avec la fonction proxy, pour recevoir une requête d'enregistrement provenant d'un autre terminal du réseau local et enregistrer un identifiant de cet autre terminal compris dans la requête.

Cet identifiant peut ultérieurement être utilisé par le premier terminal pour diriger des messages de signalisation entrant notamment vers l'autre terminal.

Plus particulièrement, lorsqu'un premier terminal met en oeuvre la fonction proxy, il est également configuré pour prendre en charge l'enregistrement des logiciels VoIP des autres terminaux du réseau local. On dit que les moyens d'enregistrement permettent au premier terminal la mise en oeuvre d'une fonction REGISTRAR. Lorsqu'un autre terminal local envoie une requête d'enregistrement au premier terminal, ce dernier enregistre un identifiant de cet autre terminal. Le premier terminal est capable par la suite de déterminer vers quels terminaux une demande d'appel entrante doit être redirigée, en se référant aux identifiants des terminaux locaux précédemment enregistrés. Par exemple, un appel entrant pourra être présenté par le premier terminal en parallèle vers l'ensemble des autres terminaux locaux, ou bien en mode séquentiel en fonction de différents critères (par exemple d'abord vers le premier terminal enregistré localement, puis vers le second, ...).

Par ailleurs, le premier dispositif de contrôle peut en outre comprendre des moyens de contrôle de flux configurés pour transmettre, à tous les terminaux locaux enregistrés auprès du dispositif de contrôle, une requête d'établissement de session de communication provenant du terminal distant.

De manière avantageuse, il est possible d'établir une session de communication entre un terminal distant et un quelconque terminal du réseau local avec un logiciel VoIP actif, sans que l'ensemble de ces terminaux locaux n'aient besoin de s'enregistrer auprès du réseau distant.

Dans un mode particulier de l'invention, les moyens de contrôle de flux sont configurés pour que le premier terminal ne contrôle que les transactions d'établissement de session de communication entre un terminal distant et les terminaux du réseau local dits esclaves qui ne mettent pas en oeuvre la fonction proxy.

Dans une alternative, les moyens de contrôle de flux sont configurés pour que le premier terminal contrôle toutes les transactions de session entre un terminal distant et les terminaux esclaves du réseau local, et notamment les transactions de clôture de session de communication.

Par ailleurs, le premier dispositif de contrôle peut en outre comprendre des moyens de blocage configurés, lorsque le premier terminal met en oeuvre la fonction proxy et qu'il contrôle au moins une session de communication en cours entre un autre terminal du réseau local et le terminal distant, pour empêcher le premier terminal de désactiver la fonction proxy.

Ainsi, lorsqu'une session de communication est en cours entre un terminal esclave et le terminal distant, il est possible d'interdire l'arrêt du terminal maître si celui-ci est configuré pour contrôler toutes transactions de session (notamment les transactions de clôture de session) entre les terminaux esclaves et le réseau de communication distant.

Ce blocage peut impliquer, par exemple, l'envoie à l'utilisateur du terminal maître d'une notification d'alerte (via l'affichage d'un message par exemple), informant qu'une communication est en cours entre un terminal esclave et le réseau distant et qu'il est donc nécessaire d'attendre la clôture de cette session de communication avant de désactiver le terminal maître. L'utilisateur de terminal maître sera ainsi informé qu'il n'est pas autorisé à désactiver un logiciel de téléphonie VoIP, par exemple.

De cette manière, il est possible d'éviter des communications dites « fantômes », c'est-à-dire des sessions de communication en cours bloquées à l'état « appel en cours » car le terminal esclave, étant privé de son terminal maître, est dans l'incapacité de procéder à la clôture de la session en cours. Les communications fantômes sont néfastes notamment car elles peuvent empêcher le terminal esclave en question d'établir une autre session de communication.

Dans un mode particulier de l'invention, le premier dispositif de contrôle comprend en outre des moyens de notification configurés pour que le premier terminal, lorsqu'il met en oeuvre la fonction proxy, envoie une notification à tous les terminaux esclaves du réseau local afin de les informer de son intention de désactiver sa fonction proxy.

De cette manière, les terminaux esclaves sont prévenus en avance de la perte à venir de leur terminal maître et peuvent exécuter en réponse une action appropriée.

De manière alternative, une notification peut informer les terminaux esclaves que le terminal maître a désactivé sa fonction proxy.

L'invention concerne également un deuxième dispositif de contrôle de session de communication SIP compris dans un premier terminal local d'un réseau local, relié via une passerelle à un réseau de communication distant auquel est connecté au moins un terminal distant, le dispositif de contrôle comprenant :
des moyens de détermination pour déterminer si un autre terminal local du réseau local est configuré pour mettre en oeuvre une fonction proxy pour contrôler au moins les transactions d'établissement de session entre le terminal distant et chacun des terminaux du réseau local ; et
des moyens de configuration aptes, en cas de succès de la détermination, à configurer le premier terminal local pour qu'au moins les transactions d'établissement de session avec le terminal distant soient transmises uniquement par l'intermédiaire d'un terminal dit terminal proxy mettant en oeuvre la fonction proxy dans le réseau local.

Comme indiqué ci-dessus, lorsque le premier terminal est configuré pour qu'au moins les transactions d'établissement de session avec le terminal distant soient transmises uniquement par l'intermédiaire d'un terminal maître dans le réseau local, on dit qu'il est configuré en tant que terminal esclave.

L'invention permet avantageusement de limiter les requêtes d'enregistrement et les réponses à ces requêtes échangées entre les terminaux d'un réseau local et un réseau distant.

L'invention est avantageuse en ce qu'elle ne nécessite pas la mise en oeuvre d'un module de type SENAC-F dans la passerelle résidentielle, comme décrit ci-dessus. Un deuxième dispositif de contrôle est simplement installé sur le ou les terminaux du réseau local pouvant fonctionner en tant que terminal esclave.

Par ailleurs, les moyens de détermination dans le premier et/ou le deuxième dispositif de contrôle peuvent en outre être configurés pour déterminer si un autre terminal du réseau local met en oeuvre une fonction REGISTRAR, et dans l'affirmative, pour en déduire que cet autre terminal met également en oeuvre la fonction proxy.

En d'autres termes, dans un mode particulier de l'invention, lorsque qu'un autre terminal tente de s'enregistrer auprès du premier terminal et que cette tentative d'enregistrement réussit, cela signifie que le premier terminal met en oeuvre la fonction REGISTRAR. Lorsque que cet autre terminal détecte que le premier terminal est configuré avec la fonction REGISTRAR, il en déduit que le premier terminal est également configuré avec la fonction proxy.

Pour déterminer si un terminal du réseau local est configuré avec la fonction REGISTRAR, un terminal du réseau local envoie, par exemple, une requête d'enregistrement à tous les terminaux du réseau local, excepté à lui-même.

Par ailleurs, le deuxième dispositif de contrôle peut comprendre en outre des moyens de détection configurés pour détecter que le terminal proxy a cessé de mettre en oeuvre ladite fonction proxy dans le réseau local et pour déclencher une action dans le cas d'une telle détection.

Ces moyens de détection peuvent être configurés, par exemple, pour détecter une notification émise par le terminal maître, cette notification ayant pour but d'informer les terminaux esclaves de l'intention du terminal maître de désactiver sa fonction proxy. De manière alternative, cette notification peut informer les terminaux esclaves que le terminal maître a désactivé sa fonction proxy.

Ces moyens de détection peuvent également être configurés pour qu'un terminal esclave envoie à intervalle régulier des requêtes d'enregistrement au terminal maître. Lorsqu'une tentative de rafraichissement d'enregistrement est refusée par le terminal maître, le terminal esclave en déduit que le terminal anciennement maître a désactivé sa fonction REGISTRAR et donc, qu'il a également désactivé sa fonction proxy.

Un terminal maître pourra désactiver sa fonction proxy pour diverses raisons (arrêt du logiciel VoIP maître, terminal maître planté, etc...).

On entend ici par « action », par exemple, le fait que le terminal esclave tentera à nouveau de déterminer si un terminal maître est présent dans le réseau local. Pour se faire, le terminal esclave envoie, par exemple, une requête d'enregistrement à tous les terminaux du réseau local, excepté à lui-même.

L'action en question peut également comprendre le fait que le terminal esclave active la fonction proxy afin de devenir un terminal maître dans le réseau local.

L'invention concerne aussi un terminal d'un réseau local apte à communiquer avec un terminal distant d'un réseau distant via une passerelle, le terminal comprenant au moins un premier et/ou un deuxième dispositif de contrôle tels que décrits ci-dessus.

L'invention couvre en particulier un terminal comprenant un premier dispositif de contrôle configuré pour mettre en oeuvre la fonction proxy comme décrit ci-dessus et un deuxième dispositif de contrôle configuré pour qu'au moins les transactions d'établissement de session entre le terminal et un terminal distant soit contrôlées par un terminal maître dans le réseau local.

Dans un mode particulier, le premier et le deuxième dispositif de contrôle sont combinés en un dispositif de contrôle unique.

L'invention concerne également un premier procédé de contrôle de session de communication pouvant être mis en oeuvre dans un premier terminal local d'un réseau local, pour contrôler une session de communication entre le premier terminal et un terminal distant d'un réseau de communication distant, une passerelle reliant le réseau local au réseau distant, le procédé comprenant :
une étape de détermination pour déterminer si un autre terminal local du réseau local est configuré pour mettre en oeuvre une fonction proxy pour contrôler au moins les transactions d'établissement de session entre le terminal distant et chacun des terminaux du réseau local ; et
une étape de configuration, en cas d'échec de la détermination, pour enregistrer le premier terminal local auprès du réseau distant et pour configurer le premier terminal local afin qu'il active la fonction proxy.

L'invention concerne également les modes de réalisation du premier procédé de contrôle comprenant les caractéristiques définies en référence aux différents modes de réalisation du premier dispositif de contrôle décrits ci-dessus.

De plus, le premier procédé de contrôle et ses modes de réalisation particuliers présentent les mêmes avantages que ceux mis en évidence vis-à-vis du premier dispositif de contrôle et de ses modes particuliers.

En particulier, le premier procédé de contrôle selon l'invention peut comprendre en outre une étape d'enregistrement, lorsque le premier terminal est configuré avec la fonction proxy, pour recevoir une requête d'enregistrement provenant d'un autre terminal local du réseau local et pour enregistrer un identifiant de l'autre terminal compris dans ladite requête.

Le premier procédé de contrôle peut également comprendre une étape de contrôle de flux pour transmettre, à tous les terminaux locaux enregistrés auprès du premier terminal, une requête d'établissement de session de communication provenant du terminal distant.

L'invention concerne également un deuxième procédé de contrôle de session de communication pouvant être mis en oeuvre dans un premier terminal local d'un réseau local, pour contrôler une session de communication entre le premier terminal et un terminal distant d'un réseau de communication distant, une passerelle reliant le réseau local au réseau distant, le procédé comprenant :
une étape de détermination pour déterminer si un autre terminal local du réseau local est configuré pour mettre en oeuvre une fonction proxy pour contrôler au moins les transactions d'établissement de session entre le terminal distant et chacun des terminaux du réseau local ; et
une étape de configuration, en cas de succès de la détermination, pour configurer le premier terminal local pour qu'au moins les transactions d'établissement de session avec le terminal distant soient transmises uniquement par l'intermédiaire d'un terminal local dit terminal maître mettant en oeuvre la fonction proxy dans le réseau local.

L'invention concerne également les modes de réalisation du deuxième procédé de contrôle comprenant les caractéristiques définies en référence aux différents modes de réalisation du deuxième dispositif de contrôle décrits ci-dessus.

De plus, le deuxième procédé de contrôle et ses modes de réalisation particuliers présentent les mêmes avantages que ceux mis en évidence vis-à-vis du deuxième dispositif de contrôle et de ses modes particuliers.

En particulier, l'étape de détermination selon le premier et/ou le deuxième procédé de contrôle peut permettre de déterminer si un autre terminal du réseau local met en oeuvre une fonction REGISTRAR, et dans l'affirmative, permettre de déduire que cet autre terminal met également en oeuvre la fonction proxy.

Par exemple, l'étape de détermination peut comprendre l'envoi d'une requête d'enregistrement à tous les terminaux du réseau local, excepté au premier terminal.

Dans un mode particulier de réalisation de l'invention, les différentes étapes du premier et/ou du deuxième procédé de contrôle selon l'invention sont déterminées par des instructions de programmes d'ordinateurs.

En conséquence, l'invention vise aussi un programme d'ordinateur sur un support d'informations, ce programme étant susceptible d'être mis en oeuvre dans un premier et/ou un deuxième dispositif de contrôle tels que décrits ci-dessus ou plus généralement dans un ordinateur, ce programme comportant des instructions adaptées à la mise en oeuvre des étapes du premier et/ou du deuxième procédé de contrôle tels que décrits ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 déjà décrite représente, dans son environnement, un exemple connu de dispositif de contrôle de session de communication installé dans une passerelle résidentielle ;
- la figure 2 représente, dans leur environnement, un ensemble de terminaux équipés de dispositifs de contrôle de session de communication SIP conformes à un mode particulier de réalisation de l'invention ;
- la figure 3 représente, de façon schématique, l'architecture matérielle d'un terminal conventionnel muni d'un dispositif de contrôle de session de communication SIP conforme à un mode particulier de réalisation de l'invention ; et
- la figure 4 représente, sous forme d'un organigramme, les principales étapes d'un procédé de contrôle conforme à un mode particulier de réalisation de l'invention ;
- la figure 5 représente, dans leur environnement, un ensemble de terminaux équipés de dispositifs de contrôle de session de communication SIP conformes à un autre mode de réalisation de l'invention ;

### Description détaillée d'un mode de réalisation

On notera tout d'abord que, dans ce document, l'invention est décrite en référence à un réseau de communication distant de type IMS. On comprendra cependant que l'invention s'applique également pour des réseaux de communication de types différents, tels que des réseaux SIP non-conformes IMS, des réseaux H.323...

De même, l'invention est décrite ici en référence au protocole standardisé SIP. On comprendra cependant que l'invention s'applique également à d'autres types de protocole, tels que le protocole H.323 défini par l'UIT (l'Union Internationale des Télécommunications).

Par ailleurs, l'invention est décrite ici en référence à des terminaux munis d'un logiciel de téléphonie VoIP. On notera cependant que l'invention s'applique également à d'autres types de terminaux tels que des terminaux téléphoniques SIP, des téléviseurs IPTV, un PBX (Private Branch Exchange)...

Nous allons à présent décrire comment l'invention permet de contrôler une session de communication SIP entre un terminal d'un réseau local et un terminal distant d'un réseau de communication distant.

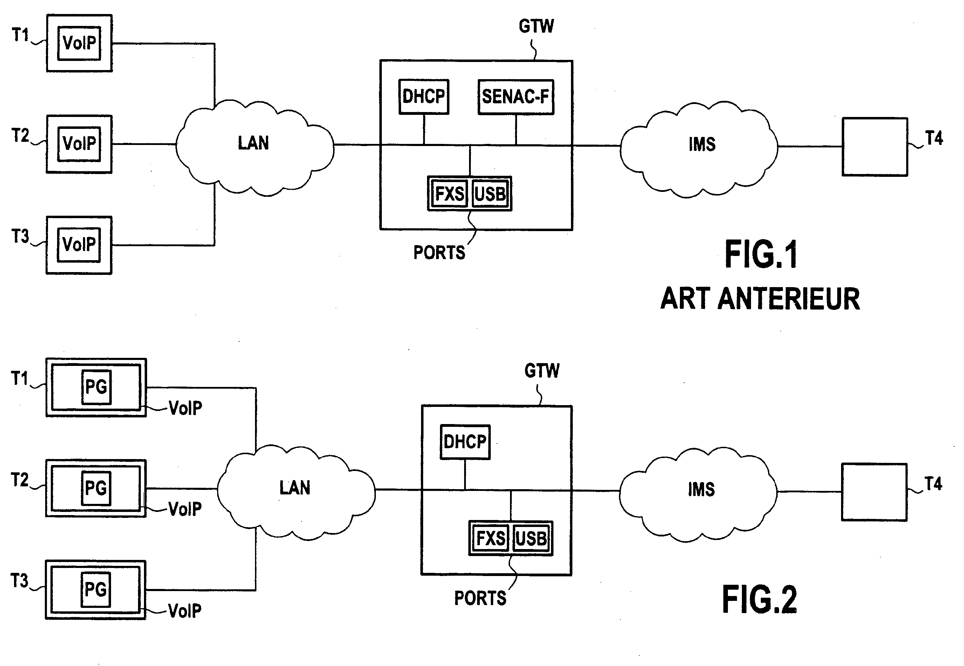

La **figure 2** représente trois terminaux locaux T1, T2 et T3 conformes à un mode de réalisation de l'invention.

Chacun des terminaux T1, T2 et T3 est muni d'un logiciel de téléphonie VoIP (ou « softphone »). Ces terminaux comportent en outre un premier dispositif de contrôle et un deuxième dispositif de contrôle conformes à l'invention. Dans l'exemple décrit ici, le logiciel VoIP de chaque terminal T1, T2 et T3 intègre un programme PG mettant en oeuvre un premier et un second dispositif de contrôle selon l'invention.

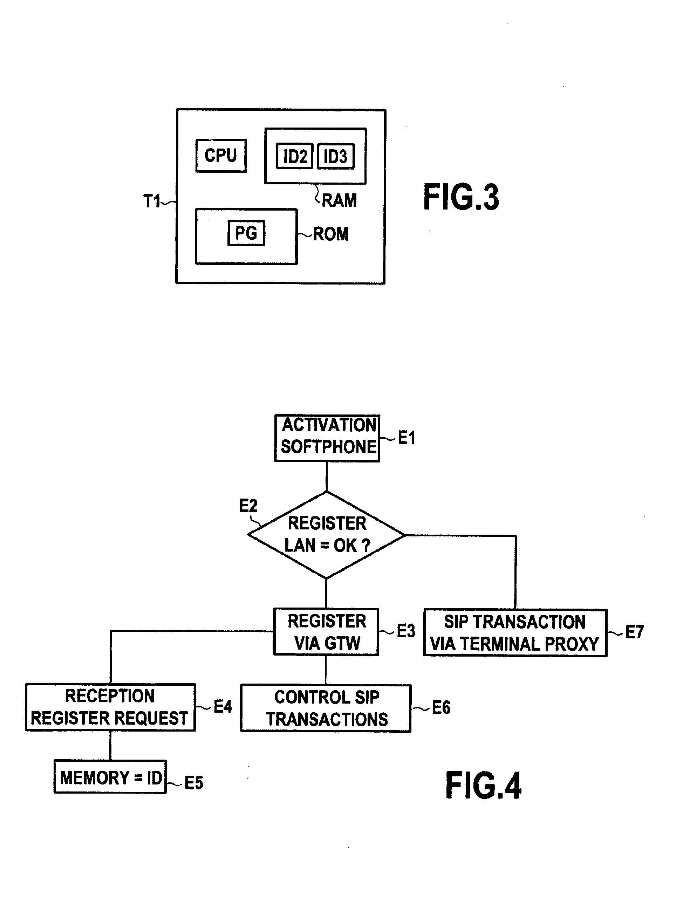

La **figure 3** représente l'architecture matérielle du terminal T1, l'architecture des terminaux T2 et T3 étant identique.

Le terminal T1 présente ici une architecture d'ordinateur conventionnelle. Il comporte notamment un processeur CPU, une mémoire vive RAM et une mémoire morte ROM.

La mémoire morte ROM mémorise un programme d'ordinateur PG conforme à l'invention comprenant des instructions pour l'exécution des étapes du premier et du deuxième procédé de contrôle selon l'invention. Ce programme d'ordinateur PG est, par exemple, intégré ou couplé au logiciel VoIP du premier terminal.

Le processeur CPU, la mémoire morte ROM et la mémoire vive RAM constituent, en combinaison, un dispositif de contrôle conforme à l'invention.

Chacun des terminaux locaux T1, T2 et T3 est connecté à un réseau local LAN qui est lui-même relié à un réseau de communication distant IMS par l'intermédiaire d'une passerelle résidentielle GTW. Le logiciel VoIP de chaque terminal local est destiné à permettre à un utilisateur de communiquer notamment avec un terminal distant T4 du réseau distant IMS.

La passerelle résidentielle GTW présente une architecture matérielle conventionnelle et comprend en particulier des modules DHCP, FXS et USB analogues à ceux décrits en référence à la figure 1. En revanche, la passerelle GTW représentée en figure 2 diffère de celle de la figure 1 en ce qu'elle ne comprend pas de module SENAC-F.

Nous allons à présent décrire, en référence à la figure 4, les principales étapes d'un exemple du premier et du deuxième procédé selon l'invention pour contrôler une session de communication SIP entre au moins un des terminaux locaux T1, T2 et T3 représentés dans la figure 2 et un terminal distant T4.

Plus précisément, dans cet exemple, les étapes E1, E2, E3, E4, E5 et E6 permettent l'exécution du premier procédé de contrôle selon l'invention et les étapes E1, E2 et E7 permettent l'exécution du deuxième procédé de contrôle selon l'invention.

Lorsque la passerelle résidentielle GTW est activée, elle s'enregistre de manière conventionnelle auprès du réseau IMS après avoir obtenu une adresse IP.

Lorsque le premier terminal local T1 est allumé, il obtient à partir du module DHCP de la passerelle résidentielle GTW une adresse IP privée (l'adresse 192.168.1.2, par exemple) et un masque de réseau (255.255.255.0, par exemple).

Une fois que le logiciel VoIP du terminal local T1 est activé (manuellement ou de manière automatique) (étape E1), il exécute un algorithme afin de déterminer si un autre terminal du réseau local LAN est configuré pour mettre en oeuvre une fonction proxy (étape E2). Pour se faire, le programme PG du terminal T1 configure celui-ci pour émettre une requête d'enregistrement SIP REGISTER vers un numéro de port UDP/TCP (par exemple le port bien connu 5060 affecté au protocole SIP ou tout autre port ≥1024 et ≤65535 dédié à l'invention) en balayant toutes les adresses IP du réseau local LAN (de 192.168.1.1 à 192.168.1.254, par exemple), à l'exception de l'adresse IP LAN attribuée au terminal T1.

Dans le cas où le terminal T1 ne reçoit aucune réponse positive suite à sa demande d'enregistrement auprès des terminaux du réseau local LAN, le résultat de l'étape E2 est négatif. Le terminal T1 détecte ainsi que son logiciel VoIP est le premier à s'activer dans le réseau local LAN.

Le terminal T1 met alors en oeuvre le premier procédé de contrôle selon l'invention. Plus précisément, il procède tout d'abord à l'enregistrement de son logiciel VoIP de manière standard auprès du réseau IMS par l'intermédiaire de la passerelle résidentielle GTW (étape E3).

On notera ici qu'il est nécessaire que le réseau IMS soit configuré de manière à permettre l'enregistrement de deux adresses de contact SIP avec la même identité publique IMPU. En effet, le logiciel VoIP du terminal T1 et la passerelle GTW s'enregistrent tous deux auprès du réseau IMS.

Si la requête d'enregistrement depuis le logiciel VoIP du terminal T1 est valide (souscription confirmée de l'utilisateur au service VoIP...), le réseau IMS envoie en réponse un message de validation d'enregistrement (désigné communément par « 200 OK ») au terminal T1.

Le message de validation est reçu sur le même port du terminal T1 que celui utilisé pour l'envoi de la requête d'enregistrement au réseau distant IMS. L'envoi de la requête d'enregistrement et la réception du message de validation d'enregistrement sur ce même port permet le déblocage de celui-ci. L'intérêt d'un tel déblocage de port sera décrit plus en détail ultérieurement.

Le programme PG du terminal T1 configure ensuite son logiciel VoIP de manière à exécuter parallèlement deux fonctions particulières.

Le programme PG du terminal T1 exécute la fonction REGISTRAR qui sera décrite plus en détail dans la suite de la description (étapes E4 et E5).

Le programme PG du terminal T1 configure également le logiciel VoIP de T1 afin que celui-ci exécute parallèlement la fonction proxy (étape E6). La fonction proxy consiste à contrôler au moins certaines des transactions SIP de session entre le terminal distant T4 et chacun des terminaux du réseau local, dits esclaves, ne mettant pas en oeuvre la fonction proxy. Les transactions SIP de session au sens de l'invention seront décrites plus en détail dans la suite du document.

Une fois que le logiciel VoIP du terminal T1 s'est enregistré auprès du réseau IMS et exécute la fonction proxy, on dit que le terminal T1 devient un terminal maître dans le réseau LAN. Un terminal maître dans le réseau local LAN communiquera de manière conventionnelle avec le terminal distant T4.

Si en revanche, une demande d'enregistrement du logiciel VoIP du terminal T1 est acceptée par un terminal du réseau local LAN (T2 ou T3), le résultat de l'étape E2 est positif. Le terminal T1 détecte ainsi que son logiciel VoIP n'est pas le premier à s'activer dans le réseau local LAN.

En conséquence, le logiciel VoIP du terminal T1 s'enregistre localement auprès du programme PG du terminal maître en question dans le réseau local (T2 ou T3) et met alors en oeuvre le deuxième procédé de contrôle selon l'invention.

Plus précisément, le programme PG du terminal T1 configure le logiciel VoIP de ce même terminal de manière à ce qu'au moins les transactions SIP d'établissement de session entre le terminal T1 et le terminal distant T4 soient contrôlées par le logiciel VoIP d'un terminal maître dans le réseau local LAN (étape E7). L'étape E7 sera décrite plus en détail ci-dessous en référence aux terminaux T2 et T3.

On considère dans la suite de cet exemple le cas où le terminal T1 devient un terminal maître dans le réseau local LAN et met en oeuvre le premier procédé de contrôle selon l'invention.

On considère en outre qu'un utilisateur démarre le terminal T2 dans le réseau local LAN. Le terminal T2 obtient tout d'abord une adresse IP LAN (192.168.1.3, par exemple) et un masque de ce réseau (255.255.255.0, par exemple) auprès du module DHCP interne de la passerelle résidentielle GTW.

Le logiciel VoIP installé sur le terminal local T2 est ensuite activé (manuellement ou de manière automatique) (étape E1). Le programme PG configure alors le logiciel VoIP du terminal T2 pour exécuter un algorithme de manière à détecter automatiquement si un terminal maître est déjà présent dans le réseau local LAN (étape E2). Pour se faire, le logiciel VoIP du terminal local T2 envoie une requête d'enregistrement SIP REGISTER vers un numéro de port UDP prédéterminé en balayant toutes les adresses IP du réseau local LAN, à l'exception de l'adresse IP LAN attribuée au terminal T2.

Ce numéro de port UDP est le même que celui utilisé par le terminal T1 pour s'enregistrer auprès du réseau IMS.

Comme le terminal T1 est configuré en tant que terminal maître et a au préalable débloqué ce port prédéterminé, son programme PG est capable de recevoir et de reconnaître une requête d'enregistrement provenant d'un autre terminal du réseau local LAN.

Le programme PG du terminal local T1 répond donc positivement à la requête d'enregistrement provenant du logiciel VoIP du terminal local T2.

Le programme PG du terminal maître T1 extrait de la requête d'enregistrement provenant du terminal T2 un identifiant ID2 associé au terminal T2 et enregistre cet identifiant dans la mémoire RAM du terminal T1 (étape E5). Lorsque le programme PG du terminal T1 répond positivement à la requête d'enregistrement du logiciel VoIP d'un terminal local et enregistre l'identifiant de ce terminal local dans la mémoire RAM, de T1, on dit que le programme PG met en oeuvre la fonction REGISTRAR.

L'identifiant ID2 comprend ici un identifiant IMPU unique du terminal T2 dans le réseau local (l'adresse MAC du terminal T2, par exemple) associé à l'adresse de contact SIP du terminal T2 (par exemple, son adresse IP et son port associé).

De plus, le résultat de l'étape E2 étant positif, le terminal T2 met en oeuvre le deuxième procédé de contrôle selon l'invention. Plus précisément, le logiciel VoIP du terminal T2 détecte que le terminal maître T1 doit être utilisé comme point d'entrée du réseau SIP pour passer et recevoir des appels avec le terminal distant T4 (étape E7). Une fois enregistré auprès du terminal maître T1, le logiciel VoIP du terminal T2 est capable d'établir une session de communication SIP avec le terminal distant T4 par l'intermédiaire du logiciel VoIP du terminal T1. On dit alors que le terminal T2 devient un terminal esclave dans le réseau local LAN.

On considère ensuite que le terminal local T3 (et le logiciel VoIP associé) s'allume et s'enregistre de la même manière que le terminal T2. Par conséquent, le terminal T3 est un terminal esclave dans le réseau LAN au même titre que le terminal T2.

De plus, l'identifiant ID3 associé au terminal esclave T3 est également enregistré dans la mémoire RAM du terminal maître T1. L'identifiant ID3 est de même nature que l'identifiant ID2.

Nous allons à présent décrire le cas où le logiciel VoIP du terminal local esclave T2 souhaite établir une session de communication SIP avec le terminal distant T4, conformément à l'étape E7 du deuxième procédé de contrôle de l'invention.

Afin d'initier une session de communication entre le terminal T2 et le terminal distant T4, une succession de messages SIP sont échangés entre le terminal T2 et le terminal distant T4 (désignés par « Invite », « 100 Trying », « 180 Ringing » et « 200 OK »).

Le logiciel VoIP du terminal T2 envoie tout d'abord une requête SIP INVITE de demande d'établissement d'appel vers le terminal maître T1 (point d'entrée du réseau VoIP du point de vue du terminal T2) qui lui-même relaie cette demande d'établissement d'appel vers le réseau IMS via la passerelle résidentielle GTW. Le logiciel VoIP du terminal T1 est configuré pour modifier le contenu de la signalisation d'appel SIP émise par le terminal T2 en particulier en remplaçant l'identifiant du terminal T2 par l'identité IMPU configurée dans le terminal T1 et connue du réseau IMS. En outre, les éventuelles informations liées à l'authentification du message SIP (par exemple via Digest MD5) sont prises en charge par le terminal T1.

Les terminaux T2 et T4 s'échangent ensuite les messages SIP « 100 Trying », « 180 Ringing » et « 200 OK ». Ces messages étant connus de l'homme du métier, ils ne seront pas détaillés davantage dans la description.

On désigne ici ces échanges préliminaires de signalisation SIP par une transaction SIP d'initialisation de session.

Conformément à l'invention, les messages SIP (Invite, 100 Trying, 180 Ringing, 200 OK...) ainsi échangés lors de l'initialisation d'une session de communication entre le terminal esclave T2 du réseau LAN et le terminal distant T4 sont obligatoirement transmis par l'intermédiaire du terminal maître T1 (et de la passerelle GTW).

En effet, le terminal maître T1 se place en coupure de flux pour toutes les transactions SIP d'initialisation de session de communication réalisées entre le terminal distant T4 et un terminal esclave du réseau local LAN.

Une fois que la transaction SIP d'initialisation de session entre le terminal T2 et le terminal distant T4 est achevée, le logiciel VoIP du terminal T2 envoie un message ACK au terminal distant T4 par l'intermédiaire du logiciel VoIP du terminal maître T1 et de la passerelle GTW. Ce message ACK permet de débuter la session de communication entre le terminal T2 et le terminal distant T4.

On considère ici que l'envoi du message ACK permettant le démarrage d'une session de communication intervient lors d'une transaction ACK de session.

Conformément à l'invention, les messages ACK échangés entre le terminal esclave T2 et le terminal T4 sont obligatoirement transmis par l'intermédiaire du terminal maître T1 (et de la passerelle GTW).

De même que pour les transactions d'initialisation de session, le terminal maître T1 se place en coupure de flux pour toutes les transactions ACK réalisées entre le terminal distant T4 et un terminal esclave du réseau local LAN.

On considère ici que les transactions d'initialisation de session et les transactions ACK de session réalisées entre un terminal du réseau local LAN et un terminal du réseau distant IMS sont des « transactions d'établissement de session de communication ».

Conformément à l'invention, un terminal maître se placera obligatoirement en coupure de flux entre un terminal esclave du réseau LAN et un terminal distant T4 afin de contrôler les transactions d'établissement de session de communication.

Une fois la session de communication établie, la communication entre les terminaux T2 et T4 peut se faire directement entre la passerelle GTW et le terminal T2, sans que le terminal maître T1 soit en coupure de flux de signalisation ainsi que des flux média.

Lorsque le terminal T2 ou le terminal distant T4 souhaite suspendre la session de communication en cours, un échange de messages BYE SIP est effectué entre les terminaux T2 et T4 par l'intermédiaire du terminal maître T1.

On considère ici que les échanges de messages SIP permettant la clôture d'une session de communication interviennent lors d'une transaction SIP de clôture de session.

Dans l'exemple décrit ici, les transactions SIP de clôture de session de communication sont contrôlées par le logiciel VoIP du terminal maître T1. Cela signifie que pour les transactions SIP de clôture de session de communication, le terminal maître T1 se place en coupure de flux entre le terminal T2 et le terminal distant T4.

Dans un autre mode de réalisation de l'invention, les transactions SIP de clôture de session de communication ne sont pas contrôlées par le logiciel VoIP du terminal maître T1. Dans ce cas, le programme PG du terminal T2 configure son logiciel VoIP de manière à envoyer les messages SIP BYE directement au serveur proxy du réseau IMS (en passant néanmoins par la passerelle GTW). Ce mode permet en particulier au terminal local T2 en cours de communication d'être libéré sans difficulté dans le cas où le logiciel VoIP du terminal maître T1 est désactivé de manière inopinée.

En revanche, toutes transactions SIP d'établissement de session de communication entre les terminaux T2 et T4 sont nécessairement contrôlées par le logiciel VoIP du terminal maître T1.

On notera cependant qu'en pratique, le message INVITE (et éventuellement les messages subséquents RE-INVITE) provenant du terminal maître T1 contient des informations d'authentification. Dans l'exemple décrit ici, seul le terminal T1 est enregistré et authentifié auprès du réseau IMS et peut donc gérer la session d'authentification avec celui-ci (selon le protocole Digest MD5 par exemple). Par conséquent, dans le cas où les messages SIP INVITE lors de la transaction d'initialisation de session comprennent des informations d'authentification, le terminal T1 devra obligatoirement contrôler tous les messages de signalisation SIP entre le terminal distant T4 et le terminal esclave T2.

Nous allons à présent décrire le cas où le terminal distant T4, toujours dans le même exemple, souhaite établir une session de communication avec au moins l'un des terminaux locaux du réseau local LAN.

Le réseau IMS ne dispose ici que de deux adresses de contact, à savoir celle associée à la passerelle de communication GTW et celle associée au logiciel VoIP du terminal maître T1. Le terminal distant T4 envoie donc un message SIP de demande d'appel INVITE à destination du réseau IMS qui lui-même la transmet à la fois à la passerelle de communication GTW et au logiciel VoIP du terminal maître T1. L'envoi simultané d'une demande d'appel vers deux adresses de contact différentes fait appel à une fonction de « forking » (de distribution multiple).

Lorsque le logiciel VoIP du terminal maître T1 reçoit un message de demande d'appel, il est configuré pour effectuer à son tour une fonction de forking de manière à envoyer simultanément cette demande à tous les terminaux esclaves du réseau Local. Pour identifier les terminaux esclaves vers qui cette demande doit être envoyée, le programme PG du terminal T1 consulte la mémoire RAM du terminal T1 et détermine tous les identifiants de terminaux locaux précédemment enregistrés.

Dans l'exemple décrit ici, le terminal maître T1 consulte sa mémoire RAM et détecte les identifiants ID2 et ID3 associés respectivement aux terminaux esclaves T2 et T3. Un message SIP de demande d'appel provenant du terminal distant T4 est donc envoyé aux logiciels VoIP des terminaux T2 et T3 par l'intermédiaire du terminal T1.

Ce message de demande d'appel déclenche un signal d'appel (une sonnerie par exemple) sur les terminaux locaux T2 et T3 via leur logiciel VoIP respectif. On notera en outre qu'un signal d'appel est également activé sur le logiciel VoIP du terminal maître T1 et sur les éventuels dispositifs de communication (des téléphones physiques par exemple) connectés sur les ports physiques FXS et/ou USB de la passerelle résidentielle GTW.

On considère dans l'exemple décrit ici que l'utilisateur du terminal T3 est le premier à accepter l'appel entrant de sorte que la séquence de signal d'appel sur les logiciels VoIP des terminaux T1 et T2 (et sur d'éventuels téléphones physiques) est suspendue.

L'invention permet ainsi à un utilisateur de disposer d'un service VoIP actif sur l'ensemble des terminaux locaux du réseau LAN sans surcharger le réseau IMS avec les requêtes d'enregistrement SIP provenant de chaque logiciel VoIP actif. Dans l'exemple décrit ici, bien que le logiciel VoIP des trois terminaux locaux du réseau local LAN soit actif, seul le terminal maître est enregistré auprès du réseau IMS, de sorte que le volume des requêtes d'enregistrement et des réponses associées (acceptation ou refus du réseau IMS) entre le réseau local LAN et le réseau IMS est considérablement réduit.

Nous allons à présent décrire un autre mode de réalisation de l'étape de détermination E2 de l'invention.

Nous considérons ici qu'aucun des terminaux locaux T1, T2 et T3 n'est activé ou enregistré auprès du réseau IMS.

Lorsque le terminal T1 muni de son logiciel VoIP est activé, ce dernier interroge le réseau IMS afin de déterminer les adresses et ports de contact déjà enregistrés auprès du réseau IMS avec l'identité publique IMPU de la passerelle GTW. On dit alors que le terminal T1 exécute une fonctionnalité conforme à la norme SIP RFC3261. Cette fonctionnalité consiste à envoyer une requête d'enregistrement SIP REGISTER contenant l'adresse publique IMPU et une adresse de contact dont la valeur est fixée à "*".

Dans ce cas, aucun terminal maître n'est présent dans le réseau local LAN et seule la passerelle de communication GTW est enregistrée auprès du réseau IMS. Le réseau IMS transmet alors au logiciel VoIP du terminal T1 un message de validation d'enregistrement « 200 OK » comprenant l'adresse de contact IP WAN de la passerelle GTW (c'est-à-dire l'adresse IP de la passerelle dans le réseau IMS) ainsi que le numéro de port d'écoute SIP. Le terminal T1 compare ensuite l'adresse reçue avec la sienne en utilisant la valeur du masque de réseau (255.255.255.0, par exemple). Dans l'exemple décrit ici, il détecte donc que les deux adresses réseau sont différentes de sorte que le logiciel VoIP du terminal T1 est nécessairement le premier logiciel VoIP activé sur un terminal du réseau local LAN. Par conséquent, le logiciel du terminal T1 s'enregistre auprès du réseau IMS (étape E3) puis active la fonction proxy et REGISTRAR de sorte qu'il devient un terminal maître dans le réseau local LAN (étape E6).

Puis, lorsque le logiciel VoIP du terminal T2 est à son tour activé, il tente de déterminer si un terminal maître est déjà présent dans le réseau local en envoyant au réseau IMS une requête d'enregistrement comprenant l'identité publique IMPU de la passerelle GTW ainsi qu'une adresse de contact fixée à "*" (étape E2).

En retour, le réseau IMS transmet au terminal T2 un message de validation d'enregistrement « 200 OK » comprenant l'adresse IP WAN de la passerelle GTW et l'adresse IP LAN du terminal T1 (c'est-à-dire l'adresse IP du terminal T1 dans le réseau local). Le programme PG configure alors le terminal T2 pour comparer les deux adresses de contact reçues depuis le réseau IMS avec sa propre adresse IP (en utilisant un masque de réseau tel que 255.255.255.0 par exemple).

L'algorithme de comparaison échoue alors avec l'adresse IP de la passerelle GTW. En revanche, l'algorithme de comparaison détecte que le terminal T1 est déjà enregistré auprès du réseau IMS. En conséquence, le logiciel VoIP du terminal local T2 envoie une requête d'enregistrement au terminal maître T1 afin de s'enregistrer auprès de celui-ci.

Selon une autre alternative, lorsqu'un premier terminal active son logiciel de téléphonie VoIP dans le réseau local LAN, il envoie une notification à tous les autres terminaux du réseau local LAN. Ainsi, lorsqu'un second terminal du réseau local active son logiciel VoIP, il n'est pas nécessaire d'envoyer une requête d'enregistrement sur un port associé à toutes les adresses IP du réseau LAN. Le second terminal étant déjà averti de la présence du terminal T1 en tant que maître dans le réseau local, il envoie uniquement la requête d'enregistrement SIP REGISTER sur le port approprié du terminal maître T1.

Il est également envisageable qu'une table d'enregistrement (mémorisée dans la passerelle GTW par exemple) soit mise à jour dès qu'un terminal active son logiciel' VoIP et souhaite s'enregistrer. De cette manière, un terminal nouvellement activé dans le réseau local LAN peut consulter cette table et déterminer si un terminal maître est déjà présent dans le réseau local LAN.

Par ailleurs, dans un mode particulier de l'invention, les programmes PG installés sur les terminaux T1, T2 et T3 autorisent plus d'un terminal à s'enregistrer auprès du réseau IMS. Dans ce cas, chaque terminal local s'enregistrant auprès du réseau IMS devient un terminal maître dans le réseau local LAN. En revanche, il est nécessaire que le réseau IMS soit configuré de manière à autoriser un nombre suffisant d'enregistrements simultanés pour une même identité publique IMPU.

On peut ainsi envisager le cas où les N premiers terminaux du réseau local activant leur logiciel VoIP peuvent s'enregistrer auprès du réseau IMS et devenir des terminaux maîtres (N étant un nombre entier modifiable).

On peut en outre envisager le cas où au moins un terminal local devient de manière systématique un terminal maître lorsque son logiciel de VoIP est activé.

Par ailleurs, on peut également envisager la mise en oeuvre d'un mécanisme de détection de perte de terminal maître (fermeture du logiciel VoIP, arrêt du PC, ....) par les différents terminaux esclaves. Un tel mécanisme peut être mis en oeuvre, par exemple, en utilisant un mécanisme de souscription à l'évènement de perte de terminal maître via des messages SIP SUBSCRIBE et NOTIFY ou encore par la détection au niveau des terminaux VoIP esclaves de l'absence de réponses lors de leur phase d'enregistrement SIP auprès du terminal maître.

Ainsi, l'un des terminaux esclaves peut se reconfigurer lui-même en terminal maître, ou s'enregistrer auprès d'un nouveau terminal maître. En détectant dans les meilleurs délais la perte du terminal maître, il est ainsi possible de limiter le délai d'indisponibilité de service occasionné par la perte d'un terminal maître.

Par ailleurs, dans un mode particulier de l'invention, le logiciel VoIP d'un terminal maître met également en oeuvre une fonction CAC (pour « Call Control Admission ») permettant d'autoriser ou non les sessions d'appel entrantes et/ou sortantes en fonction des capacités du réseau d'accès. Ainsi, la qualité du/des appels en cours n'est pas dégradée dès lors qu'un nouvel appel entrant/sortant est présenté alors que la capacité en bande passante du réseau d'accès (ADSL, 3G, FTTH,...) est déjà atteinte. La configuration de cette limite peut être fournie par exemple par téléchargement de fichier de configuration à la charge de l'opérateur téléphonique ou bien localement par l'utilisateur via une interface homme-machine dédiée.

Par ailleurs, dans les exemples décrits ci-dessus, le logiciel VoIP de chacun des terminaux du réseau local LAN intègre un programme PG conforme à l'invention. Les logiciels VoIP des terminaux T1, T2 et T3 mettent alors en oeuvre les fonctions proxy et REGISTRAR telles que décrites ci-dessus.

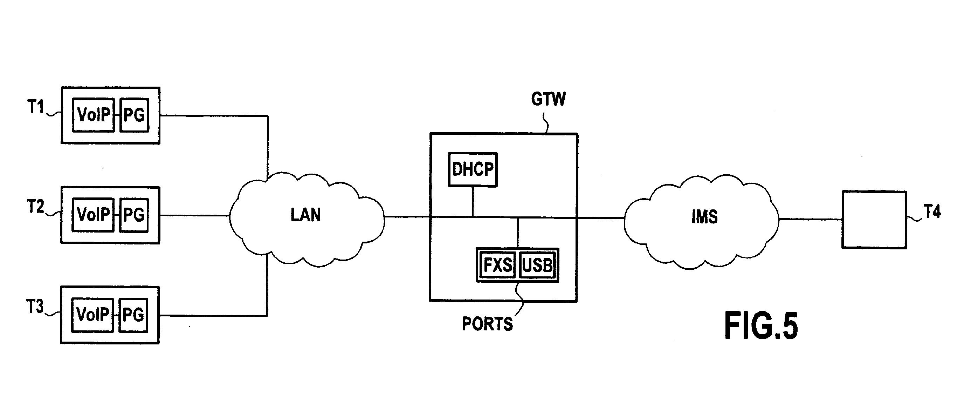

Dans une alternative représentée en **figure 5**, les terminaux T1, T2 et T3 du réseau local sont chacun munis d'un logiciel VoIP identique à ceux installés sur les terminaux conventionnels du réseau local LAN représentés en figure 1. En particulier, les logiciels VoIP des terminaux T1, T2 et T3 n'intègrent pas de programme PG comme dans l'exemple représenté en figure 2. En revanche, dans cette alternative, les terminaux T1, T2 et T3 sont chacun munis d'un module PG qui est couplé au logiciel VoIP du même terminal, mais séparé de celui-ci. Dans ce cas, le module PG met en oeuvre un premier et un deuxième dispositif de contrôle selon l'invention, ces dispositifs mettant respectivement en oeuvre un premier et un deuxième procédé de contrôle selon l'invention.

En notera en particulier que dans cette alternative, lorsque le terminal T1 du réseau local est activé et détecte qu'il n'existe pas de terminal maître dans le réseau local, ce n'est pas le logiciel VoIP mais le module PG de ce terminal qui s'enregistre auprès du réseau distant IMS avec l'identité IMPU. Une fois que le module PG de T1 est enregistré auprès du réseau IMS, celui-ci met en oeuvre les fonctions proxy et REGISTRAR de manière analogue aux exemples décrits précédemment.

La principale différence réside dans le fait qu'une fois la fonction REGISTRAR activée, le logiciel VoIP du terminal T1 s'enregistre localement avec sa propre identité (l'adresse MAC, par exemple) auprès du module PG du terminal T1, tout comme le feront les terminaux esclaves T2 et T3 lors de leur activation. Par conséquent, la mémoire RAM du terminal maître T1 contiendra l'identifiant ID1 du terminal T1 ainsi que l'identifiant des terminaux esclaves qui s'enregistreront par la suite.

Cette alternative est avantageuse en ce qu'elle permet de configurer un terminal pour mettre en oeuvre le premier et/ou le deuxième procédé selon l'invention tout en conservant un logiciel VoIP conventionnel. Cette alternative nécessite simplement l'ajout d'un module PG conforme à l'invention, ce module étant couplé au logiciel VoIP.

## Revendications

1. Premier dispositif de contrôle (PG) de session de communication compris dans un premier terminal local (T1) d'un réseau local (LAN), relié via une passerelle (GTW) à un réseau de communication distant (IMS) auquel est connecté au moins un terminal distant (T4), ledit dispositif de contrôle comprenant :
des moyens de détermination pour déterminer si un autre terminal local (T2, T3) dudit réseau local est configuré pour mettre en oeuvre une fonction proxy pour contrôler au moins les transactions d'établissement de session entre le terminal distant (T4) et chacun des terminaux du réseau local ; et
des moyens de configuration aptes, en cas d'échec de ladite détermination, à enregistrer ledit premier terminal auprès dudit réseau distant (IMS) et à configurer ledit premier terminal local pour qu'il active ladite fonction proxy.

2. Premier dispositif de contrôle selon la revendication 1, comprenant en outre :
des moyens d'enregistrement configurés, lorsque ledit premier terminal met en oeuvre la fonction proxy, pour recevoir une requête d'enregistrement provenant d'un autre terminal local (T2, T3) du réseau local et enregistrer un identifiant dudit autre terminal local compris dans ladite requête.

3. Premier dispositif de contrôle selon la revendication 2 comprenant en outre :
des moyens de contrôle de flux configurés pour transmettre, à tous les terminaux locaux enregistrés auprès dudit dispositif de contrôle, une requête d'établissement de session de communication provenant dudit terminal distant.

4. Premier dispositif de contrôle selon l'une quelconque des revendications 1 à 3 comprenant en outre :
des moyens de blocage configurés, lorsque ledit premier terminal met en oeuvre la fonction proxy et qu'il contrôle au moins une session de communication en cours entre un autre terminal du réseau local et ledit terminal distant, pour empêcher ledit premier terminal de désactiver la fonction proxy.

5. Deuxième dispositif de contrôle (PG) de session de communication compris dans un premier terminal local (T1) d'un réseau local (LAN), relié via une passerelle (GTW) à un réseau de communication distant (IMS) auquel est connecté au moins un terminal distant (T4), ledit dispositif de contrôle comprenant :
des moyens de détermination pour déterminer si un autre terminal local (T2, T3) dudit réseau local est configuré pour mettre en oeuvre une fonction proxy pour contrôler au moins les transactions d'établissement de session entre le terminal distant (T4) et chacun des terminaux du réseau local ; et
des moyens de configuration aptes, en cas de succès de ladite détermination, à configurer ledit premier terminal local pour qu'au moins les transactions d'établissement de session avec ledit terminal distant soient transmises uniquement par l'intermédiaire d'un terminal dit terminal proxy mettant en oeuvre la fonction proxy dans le réseau local.

6. Dispositif de contrôle selon la revendication 1 ou 5, dans lequel les moyens de détermination sont en outre configurés pour déterminer si un autre terminal du réseau local met en oeuvre une fonction REGISTRAR, et dans l'affirmative, pour en déduire que cet autre terminal met également en oeuvre la fonction proxy.

7. Deuxième dispositif de contrôle selon la revendication 5 ou 6 comprenant en outre :
des moyens de détection configurés pour détecter que ledit terminal proxy a cessé de mettre en oeuvre ladite fonction proxy dans le réseau local et pour déclencher une action dans le cas d'une telle détection.

8. Terminal (T1) d'un réseau local (LAN) apte à communiquer avec un terminal distant (T4) d'un réseau distant (IMS) via une passerelle (GTW), ledit terminal comprenant au moins un dispositif parmi :
- un premier dispositif de contrôle selon l'une quelconque des revendications 1 à 4 ; et
- un deuxième dispositif de contrôle selon l'une quelconque des revendications 5 à 7.

9. Premier procédé de contrôle de session de communication pouvant être mis en oeuvre dans un premier terminal local (T1) d'un réseau local (LAN), pour contrôler une session de communication entre ledit premier terminal et un terminal distant (T4) d'un réseau de communication distant (IMS), une passerelle (GTW) reliant ledit réseau local audit réseau distant, le procédé comprenant :
une étape de détermination pour déterminer si un autre terminal local (T2, T3) dudit réseau local est configuré pour mettre en oeuvre une fonction proxy pour contrôler au moins les transactions d'établissement de session entre le terminal distant (T4) et chacun des terminaux du réseau local ; et
une étape de configuration, en cas d'échec de ladite détermination, pour enregistrer ledit premier terminal local auprès du réseau distant (IMS) et pour configurer ledit premier terminal local pour qu'il active ladite fonction proxy.

10. Premier procédé de contrôle selon la revendication 9, comprenant en outre :
une étape d'enregistrement; lorsque ledit premier terminal local met en oeuvre ladite fonction proxy, pour recevoir une requête d'enregistrement provenant d'un autre terminal local (T2, T3) du réseau local et pour enregistrer un identifiant dudit autre terminal compris dans ladite requête.

11. Premier procédé de contrôle selon la revendication 10 comprenant en outre :
une étape de contrôle de flux pour transmettre, à tous les terminaux locaux enregistrés auprès dudit premier terminal, une requête d'établissement de session de communication provenant dudit terminal distant.

12. Deuxième procédé de contrôle de session de communication pouvant être mis en oeuvre dans un premier terminal local (T1) d'un réseau local (LAN), pour contrôler une session de communication entre ledit premier terminal et un terminal distant (T4) d'un réseau de communication distant (IMS), une passerelle (GTW) reliant ledit réseau local audit réseau distant, le procédé comprenant :
une étape de détermination pour déterminer si un autre terminal local (T2, T3) dudit réseau local est configuré pour mettre en oeuvre une fonction proxy pour contrôler au moins les transactions d'établissement de session entre le terminal distant (T4) et chacun des terminaux du réseau local ; et
une étape de configuration, en cas de succès de ladite détermination, pour configurer ledit premier terminal local pour qu'au moins les transactions d'établissement de session avec ledit terminal distant soient transmises uniquement par l'intermédiaire d'un terminal local dit terminal maître mettant en oeuvre la fonction proxy dans le réseau local.

13. Procédé de contrôle selon la revendication 9 ou 12, dans lequel :
l'étape de détermination permet de déterminer si un autre terminal du réseau local met en oeuvre une fonction REGISTRAR, et dans l'affirmative, permet de déduire que cet autre terminal met également en oeuvre la fonction proxy.

14. Programme d'ordinateur comportant des instructions pour l'exécution des étapes du premier procédé de contrôle selon l'une quelconque des revendications 9 à 11 et/ou des étapes du deuxième procédé de contrôle selon la revendication 12 ou 13, lorsque ledit programme est exécuté par un ordinateur.

15. Support d'enregistrement lisible par un ordinateur sur lequel est enregistré un programme d'ordinateur comprenant des instructions pour l'exécution des étapes du premier procédé de contrôle selon l'une quelconque des revendications 9 à 11 et/ou des étapes du deuxième procédé de contrôle selon la revendication 12 ou 13.

## Patentansprüche

1. Erste Kommunikationssitzungs-Steuervorrichtung (PG), die in einem ersten lokalen Endgerät (T1) eines lokalen Netzes (LAN) enthalten ist, das über ein Gateway (GTW) mit einem entfernten Kommunikationsnetz (IMS) verbunden ist, mit dem wenigstens ein entferntes Endgerät (T4) verbunden ist, wobei die Steuervorrichtung Folgendes umfasst:
Bestimmungsmittel, um zu bestimmen, ob ein anderes lokales Endgerät (T2, T3) des lokalen Netzes konfiguriert ist, eine Proxy-Funktion auszuführen, um wenigstens die Transaktionen für den Aufbau einer Sitzung zwischen dem entfernten Endgerät (T4) und jedem der Endgeräte des lokalen Netzes zu steuern; und
Konfigurationsmittel, die bei negativer Bestimmung in der Lage sind, das erste Endgerät in der Nähe des entfernten Netzes (IMS) zu registrieren und das erste lokale Endgerät zu konfigurieren, damit es die ProxyFunktion aktiviert.

2. Erste Steuervorrichtung nach Anspruch 1, die auβerdem Folgendes umfasst:
Registrierungsmittel, die konfiguriert sind, dann, wenn das erste Endgerät die Proxy-Funktion ausführt, eine Registrierungsanforderung von einem anderen lokalen Endgerät (T2, T3) des lokalen Netzes zu empfangen und eine Kennung des anderen lokalen Endgeräts, die in der Anforderung enthalten ist, zu registrieren.

3. Erste Steuervorrichtung nach Anspruch 2, die auβerdem Folgendes umfasst:
Flusssteuermittel, die konfiguriert sind, an alle registrierten lokalen Endgeräte in der Nähe der Steuervorrichtung eine Anforderung zum Aufbauen einer Kommunikationssitzung von dem entfernten Endgerät zu senden.

4. Erste Steuervorrichtung nach einem der Ansprüche 1 bis 3, die außerdem Folgendes umfasst:
Sperrmittel, die konfiguriert sind, dann, wenn das erste Endgerät die Proxy-Funktion ausführt und wenigstens eine aktuelle Kommunikationssitzung zwischen einem anderen Endgerät des lokalen Netzes und dem entfernten Endgerät steuert, zu verhindern, dass das erste Endgerät die Proxy-Funktion deaktiviert.

5. Zweite Kommunikationssitzungs-Steuervorrichtung (PG), die in einem ersten lokalen Endgerät (T1) eines lokalen Netzes (LAN) enthalten ist, das über ein Gateway (GTW) mit einem entfernten Kommunikationsnetz (IMS) verbunden ist, mit dem wenigstens ein entferntes Endgerät (T4) verbunden ist, wobei die Steuervorrichtung Folgendes umfasst:
Bestimmungsmittel, um zu bestimmen, ob ein anderes lokales Endgerät (T2, T3) des lokalen Netzes konfiguriert ist, eine Proxy-Funktion auszuführen, um wenigstens die Transaktionen für den Aufbau einer Sitzung zwischen dem entfernten Endgerät (T4) und jedem der Endgeräte des lokalen Netzes zu steuern; und
Konfigurationsmittel, die bei positiver Bestimmung in der Lage sind, das erste lokale Endgerät zu konfigurieren, damit wenigstens die Transaktionen für den Aufbau einer Sitzung mit dem entfernten Endgerät ausschließlich über ein Endgerät, das Proxy-Endgerät genannt wird und die Proxy-Funktion in dem lokalen Netz ausführt, gesendet werden.

6. Steuervorrichtung nach Anspruch 1 oder 5, wobei die Bestimmungsmittel außerdem konfiguriert sind, zu bestimmen, ob ein anderes Endgerät des lokalen Netzes eine REGISTRAR-Funktion ausführt, und um im positiven Fall daraus abzuleiten, dass dieses andere Endgerät ebenfalls die Proxy-Funktion ausführt.

7. Zweite Steuervorrichtung nach Anspruch 5 oder 6, die außerdem Folgendes umfasst:
Detektionsmittel, die konfiguriert sind, zu detektieren, dass das Proxy-Endgerät die Ausführung der Proxy-Funktion in dem lokalen Netz beendet hat, und eine Aktion im Fall einer solchen Detektion auszulösen.

8. Endgerät (T1) eines lokalen Netzes (LAN), das mit einem entfernten Endgerät (T4) eines entfernten Netzes (IMS) über ein Gateway (GTW) kommunizieren kann, wobei das Endgerät wenigstens eine der folgenden Vorrichtungen umfasst:
- eine erste Steuervorrichtung nach einem der Ansprüche 1 bis 4; und
- eine zweite Steuervorrichtung nach einem der Ansprüche 5 bis 7.

9. Erstes Kommunikationssitzungs-Steuerverfahren, das in einem ersten lokalen Endgerät (T1) eines lokalen Netzes (LAN) ausgeführt werden kann, um eine Kommunikationssitzung zwischen dem ersten Endgerät und einem entfernten Endgerät (T4) eines entfernten Kommunikationsnetzes (IMS) zu steuern, wobei ein Gateway (GTW) das lokale Netz mit dem entfernten Netz verbindet, wobei das Verfahren Folgendes umfasst:
einen Bestimmungsschritt, um zu bestimmen, ob ein anderes lokales Endgerät (T2, T3) des lokalen Netzes konfiguriert ist, eine Proxy-Funktion auszuführen, um wenigstens die Transaktionen für den Aufbau einer Sitzung zwischen dem entfernten Endgerät (T4) und jedem der Endgeräte des lokalen Netzes zu steuern; und
einen Konfigurationsschritt, um bei negativer Bestimmung das erste lokale Endgerät in der Nähe des entfernten Netzes (IMS) zu registrieren und das erst lokale Endgerät zu konfigurieren, damit es die Proxy-Funktion aktiviert.

10. Erstes Steuerverfahren nach Anspruch 9, das außerdem Folgendes umfasst:
einen Registrierungsschritt, um dann, wenn das erste lokale Endgerät die Proxy-Funktion ausführt, eine Registrierungsanforderung von einem anderen lokalen Endgerät (T2, T3) des lokalen Netzes zu empfangen und eine Kennung des anderen Endgeräts, die in der Anforderung enthalten ist, zu registrieren.

11. Erstes Steuerverfahren nach Anspruch 10, das auβerdem Folgendes umfasst:
einen Flusssteuerschritt, um an alle registrierten lokalen Endgeräte in der Nähe des ersten Endgeräts eine Anforderung für den Aufbau einer Kommunikationssitzung von dem entfernten Endgerät zu senden.

12. Zweites Kommunikationssitzungs-Steuerverfahren, das in einem ersten lokalen Endgerät (T1) eines lokalen Netzes (LAN) ausgeführt werden kann, um eine Kommunikationssitzung zwischen dem ersten Endgerät und einem entfernten Endgerät (T4) eines entfernten Kommunikationsnetzes (IMS) zu steuern, wobei ein Gateway (GTW) das lokale Netz mit dem entfernten Netz verbindet, wobei das Verfahren Folgendes umfasst:
einen Bestimmungsschritt, um zu bestimmen, ob ein anderes lokales Endgerät (T2, T3) des lokalen Netzes konfiguriert ist, eine Proxy-Funktion auszuführen, um wenigstens die Transaktionen für den Aufbau einer Sitzung zwischen dem entfernten Endgerät (T4) und jedem der Endgeräte des lokalen Netzes zu steuern; und
einen Konfigurationsschritt, um bei erfolgreicher Bestimmung das erste lokale Endgerät zu konfigurieren, damit wenigstens die Transaktionen für den Aufbau einer Sitzung mit dem entfernten Endgerät ausschließlich über ein lokales Endgerät, das Master-Endgerät genannt wird und die Proxy-Funktion in dem lokalen Netz ausführt, gesendet werden.

13. Steuerverfahren nach Anspruch 9 oder 12, wobei:
der Bestimmungsschritt ermöglicht zu bestimmen, ob ein anderes Endgerät des lokalen Netzes eine REGISTRAR-Funktion ausführt und im positiven Fall ermöglicht, abzuleiten, dass dieses andere Endgerät ebenfalls die Proxy-Funktion ausführt.

14. Computerprogramm, das Befehle für die Ausführung der Schritte des ersten Steuerverfahrens nach einem der Ansprüche 9 bis 11 und/oder der Schritte des zweiten Steuerverfahrens nach Anspruch 12 oder 13, wenn das Programm von einem Computer ausgeführt wird, umfasst.

15. Computerlesbarer Aufzeichnungsträger, auf dem ein Computerprogramm aufgezeichnet ist, das Befehle für die Ausführung der Schritte des ersten Steuerverfahrens nach einem der Ansprüche 9 bis 11 und/oder der Schritte des zweiten Steuerverfahrens nach Anspruch 12 oder 13 enthält.

## Claims

1. First communication session control device (PG) included in a first local terminal (T1) of a local network (LAN), linked via a gateway (GTW) to a remote communication network (IMS) to which is connected at least one remote terminal (T4), said control device comprising:
determination means for determining whether another local terminal (T2, T3) of said local network is configured to implement a proxy function to control at least the session establishment transactions between the remote terminal (T4) and each of the terminals of the local network; and
configuration means that are able, in the event of failure of said determination, to register said first terminal with said remote network (IMS) and to configure said first local terminal to activate said proxy function.

2. First control device according to Claim 1, also comprising:
registration means configured, when said first terminal implements the proxy function, to receive a registration request from another local terminal (T2, T3) on the local network and to register an identifier of said other local terminal included in said request.

3. First control device according to Claim 2, also comprising:
stream control means configured to send, to all of the local terminals registered with said control device, a communication session establishment request from said remote terminal.

4. First control device according to any one of Claims 1 to 3, also comprising:
blocking means configured, when said first terminal implements the proxy function and controls at least one communication session underway between another terminal on the local network and said remote terminal, to prevent said first terminal from deactivating the proxy function.

5. Second communication session control device (PG) included in a first local terminal (T1) of a local network (LAN), linked via a gateway (GTW) to a remote communication network (IMS) to which is connected at least one remote terminal (T4), said control device comprising:
determination means for determining whether another local terminal (T2, T3) of said local network is configured to implement a proxy function to control at least the session establishment transactions between the remote terminal (T4) and each of the terminals of the local network; and
configuration means that are able, if said determination is successful, to configure said first local terminal so that at least the session establishment transactions with said remote terminal are sent only by means of a terminal referred to as the proxy terminal implementing the proxy function on the local network.

6. Control device according to Claim 1 or 5, in which the determination means are also configured to determine whether another terminal on the local network is implementing a REGISTRAR function and, if so, to infer therefrom that this other terminal is also implementing the proxy function.

7. Second control device according to Claim 5 or 6, also comprising:
detection means configured to detect that said proxy terminal has ceased implementing said proxy function on the local network and to trigger an action when this is detected.

8. Terminal (T1) on a local network (LAN) that is able to communicate with a remote terminal (T4) on a remote network (IMS) via a gateway (GTW), said terminal including at least one of the following devices:
- a first control device according to any one of Claims 1 to 4; and
- a second control device according to any one of Claims 5 to 7.

9. First communication session control method that can be implemented in a first local terminal (T1) on a local network (LAN) to control a communication session between said first terminal and a remote terminal (T4) of a remote communication network (IMS), a gateway (GTW) linking said local network to said remote network, the method comprising:
a determination step for determining whether another local terminal (T2, T3) of said local network is configured to implement a proxy function to control at least the session establishment transactions between the remote terminal (T4) and each of the terminals of the local network; and
a configuration step that, in the event of failure of said determination, registers said first local terminal with the remote network (IMS) and configures said first local terminal to activate said proxy function.

10. First control method according to Claim 9, also comprising:
a registration step, when said first local terminal implements said proxy function, to receive a registration request from another local terminal (T2, T3) of the local network and to register an identifier of said other terminal included in said request.

11. First control method according to Claim 10, also comprising:
a stream control step to send, to all of the local terminals registered with said first terminal, a communication session establishment request from said remote terminal.

12. Second communication session control method that can be implemented in a first local terminal (T1) on a local network (LAN) to control a communication session between said first terminal and a remote terminal (T4) on a remote communication network (IMS), a gateway (GTW) linking said local network to said remote network, the method comprising:
a determination step for determining whether another local terminal (T2, T3) on said local network is configured to implement a proxy function to control at least the session establishment transactions between the remote terminal (T4) and each of the terminals on the local network; and
a configuration step, if said determination is successful, to configure said first local terminal so that at least the session establishment transactions with said remote terminal are sent only by means of a local terminal referred to as the master terminal implementing the proxy function on the local network.

13. Control method according to Claim 9 or 12, in which:
the determination step makes it possible to determine whether another terminal on the local network is implementing a REGISTRAR function and, if so, to infer therefrom that this other terminal is also implementing the proxy function.

14. Computer program containing instructions to run the steps of the first control method according to any one of Claims 9 to 11 and/or the steps of the second control method according to Claim 12 or 13, when said program is run by a computer.

15. Recording media readable by a computer on which is saved a computer program containing instructions to run the steps of the first control method according to any one of Claims 9 to 11 and/or the steps of the second control method according to Claim 12 or 13.
